# EUROPÄISCHE PATENTSCHRIFT

(11) **EP 0 634 585 B1**
(45) Veröffentlichungstag und Bekanntmachung des Hinweises auf die Patenterteilung: **05.06.1996**
(21) Anmeldenummer: 94110454.9
(22) Anmeldetag: 05.07.1994
(51) Int. Cl.: F16D 65/10

(54) **Bremstrommel**
Brake drum
Tambour de frein

(30) Priorität: 13.07.1993 DE 4323403
(43) Veröffentlichungstag der Anmeldung: 18.01.1995
(73) Patentinhaber: Hermann Peters GmbH & Co. KG, D-58256 Ennepetal (DE)
(72) Erfinder: Cleffmann, Eckard, D-42929 Wermelskirchen (DE)
(74) Vertreter: Becker, Thomas, Dr., Dipl.-Ing.

(56) Entgegenhaltungen:
- EP-A- 0 019 583
- DE-B- 1 096 126
- DE-U- 9 203 773
- US-A- 4 674 606

## Beschreibung

Die Erfindung betrifft eine Bremstrommel mit einer zylindrischen, inneren Bremsfläche für korrespondierende Bremsbacken und einer, am offenen Ende der Bremstrommel ausgebildeten, ringförmigen Stirnfläche.

Eine Bremstrommel mit den vorstehend genannten Merkmalen entspricht seit langem dem Stand der Technik, wie beispielhaft die EP O 019 583 A1, DE-AS 1 096 126 und DE 92 03 773 U1 zeigen.

Wie sich der letztgenannten Schrift entnehmen läßt, besteht bei derartigen Bremstrommeln der Wunsch nach einer Verschleißanzeige. Die Haftreibung zwischen der zylindrischen Bremsfläche der Bremstrommel und den Bremsbelägen führt einerseits zu einem Verschleiß der Bremsbeläge, gleichzeitig aber auch zu einem Abrieb der Bremsfläche.

In der Regel kann eine Bremsanlage zwei- bis dreimal mit neuen Bremsbelägen bestückt werden, bevor die Bremstrommel erneuert werden muß, weil der Verschleiß im Bereich der Bremsfläche zu groß und damit die Wandstärke der Bremstrommel zu klein geworden sind.

Teilweise wird die Bremsfläche zwischen einzelnen Reparaturen auch "ausgedreht", um wieder eine gleichmäßigere Bremsfläche herzustellen, so daß der Verschleiß der Bremsbeläge und die Lebensdauer der Bremstrommel insgesamt verlängert werden können.

Die Verschleißanzeige nach der DE 92 03 773 besteht darin, daß an der Öffnung der Bremstrommel ein, in die Bremsfläche eingelassener umlaufender Falz angeordnet ist, der sich in axialer Richtung mindestens bis zu den Bremsbelägen erstreckt.

Auf diese Weise soll eine visuelle Anzeige des Verschleißgrades ermöglicht werden, je nachdem, bis zu welcher Höhe des Falzes die Innenfläche der Bremstrommel abgenutzt ist.

Berücksichtigt man, daß typischerweise bei LKW-Bremstrommeln der Innendurchmesser der Bremstrommel im Neuzustand nur circa 3,2 mm kleiner ist als im maximal zulässigen Verschleißzustand, ergibt sich daraus, daß der umlaufende Falz eine maximale Tiefe (Höhe) von 1,6 mm aufweisen darf.

Berücksichtigt man weiter, daß der Bremsbelagabrieb den Falz leicht verstopfen kann und Verzunderungen der im Betrieb teilweise rot glühenden Bremstrommel zu Verkrustungen in diesem Bereich führen, so wird deutlich, daß auch mit Hilfe eines Sichtfensters im Bereich des, die Bremstrommel am offenen Ende abdeckenden Blechs eine visuelle Überprüfung des Verschleißzustandes bei montierter Bremstrommel praktisch nicht möglich ist und sich der Verschleißzustand nur nach Demontage, zum Beispiel im Reparaturfall, überprüfen läßt.

Der Erfindung liegt insoweit die Aufgabe zugrunde, eine Möglichkeit aufzuzeigen, wie auch unter den hier bestehenden, extrem schwierigen konstruktiven und geometrischen Rahmenbedingungen eine sichere Verschleißanzeige bei Bremstrommeln der gattungsgemäßen Art möglich ist.

Der Erfindung liegt dabei die Erkenntnis zugrunde, daß die Verschleißanzeige aus dem vom Bremsbelag überdeckten Abschnitt der Bremsfläche in einen Abschnitt der Bremstrommel verlegt werden muß, der weniger verschmutzungsgefährdet und optisch, wie mechanisch leicht zugänglich ist.

Bei der erfindungsgemäßen Bremstrommel wird die Stelle zur Verschleißanzeige deshalb in den Bereich der Stirnfläche der Bremstrommel verlegt.

Dabei ist Voraussetzung, daß der Bremsbelag, in Richtung auf das offene Ende der Bremstrommel, mit dem entsprechenden Abschnitt der Bremsfläche entweder bündig abschließt oder geringfügig über die Bremsfläche vorsteht. Dies ist deshalb wichtig, damit auch in dem, der Verschleißanzeige dienenden Abschnitt der Bremstrommel derselbe Verschleißgrad besteht wie im Inneren der Bremstrommel.

Konkret besteht die Verschleißanzeige bei einer Bremstrommel der eingangs genannten Art darin, daß zumindest der, an die Bremsfläche anschließende Abschnitt der Stirnfläche oberflächlich strukturiert ist.

Mit anderen Worten: der am offenen Ende der Bremstrommel sich an die Bremsfläche anschließende Abschnitt der Stirnfläche weist oberflächlich eine Profilierung auf, die sowohl optisch, wie auch mit einem mechanischen Hilfsgerät, zum Beispiel einem Stift, erkannt werden kann.

Ist der profilierte Abschnitt nach einer vorteilhaften Ausführungsform ringförmig gestaltet und entspricht die Breite zum Beispiel dem maximalen Verschleißzustand der Bremstrommel, so steht dem Kontrolleur eine einfache Überprüfung des Verschleißzustandes der Bremstrommel zur Verfügung. Sieht er die Rasterung (Profilierung) zumindest noch teilweise, so ist der maximale Verschleißzustand noch nicht erreicht. Ist sie verschwunden, ist es Zeit, die Bremstrommel zu wechseln. Noch einfacher und sicherer läßt sich der Verschleißzustand mit einem mechanischen Hilfsgerät erfassen, wozu beispielsweise eine Art Spatel oder dergleichen dienen kann. Im Notfall hilft aber zum Beispiel auch ein Schlüssel oder ähnlicher Gegenstand, der - zum Beispiel über ein ähnliches Sichtfenster, wie in der DE 92 03 773 U1 dargestellt - auf die betreffende Stelle geführt wird. Ist die Rasterung (Profilierung) noch feststellbar, ist der maximale Verschleißzustand noch nicht erreicht; andernfalls muß die Bremstrommel getauscht werden.

Die Oberflächenstrukturierung kann auf verschiedene Art und Weise erfolgen. Im einfachsten Fall besteht sie aus einer Materialaufrauhung. Auch Sicken und/oder Noppen-Ausbildungen sind möglich. Da - wie weiter oben dargestellt - im Normalfall maximal 1,6 mm (in radialer Richtung) Verschleiß der Bremsfläche zulässig sind, steht also nur ein relativ schmaler ringförmiger Abschnitt zur Verschleißanzeige zur Verfügung, weshalb nach einer besonders vorteilhaften Ausführungsform auf diesem ringförmigen Abschnitt eine radiale Rippung aufgebracht wird, die besonders leicht herstellbar und abgreifbar ist.

Nach einer weiteren Ausführungsform schließt sich an einen ersten ringförmigen, inneren Abschnitt eine Ringnut an, wobei der ringförmige Abschnitt und die Ringnut vorzugsweise konzentrisch zueinander verlaufen. Dabei kann der innere Abschnitt - wie vorstehend beschrieben - mit der Oberflächenstrukturierung ausgebildet sein. Die Ringnut kann ein unterschiedliches Querschnittsprofil haben, beispielsweise das eines Kreisbogenabschnittes oder eines V.

Der Vorteil dieser Ausführungsform besteht darin, daß die Ringnut selbst oder zusammen mit dem inneren Abschnitt der Stirnfläche eine Verschleißanzeige bildet.

Beträgt die Breite des inneren Ringabschnittes beispielsweise 0,6 mm, so könnte die Ringnut eine Breite bis etwa 1 mm aufweisen. Eine solche Ringnut läßt sich leicht in die Stirnfläche der Bremstrommel einbringen und ebenso leicht optisch wie mechanisch überprüfen. Ist der innere Verschleiß so weit fortgeschritten, daß sich die Ringnut nicht mehr fühlen oder erkennen läßt, so ist dies auch bei dieser Ausführungsform ein Hinweis für einen Bremstrommelwechsel.

Dabei kann die Nut auch alleine als Verschleißanzeige dienen.

Durch die unterschiedliche Ausbildung der ringförmigen Abschnitte der Stirnfläche (radial betrachtet) lassen sich auch Zonen unterschiedlichen Verschleißgrades anzeigen. Ist zum Beispiel die innere Rippung verschlissen, kann dies bei entsprechender Dimensionierung ein Signal für einen Verschleißzustand darstellen, bei dem die Bremstrommel ausgedreht werden muß. Ist auch der weitere Profilabschnitt der Stirnfläche, zum Beispiel die Ringnut, vollständig verschwunden, kann dies - wiederum bei entsprechender Dimensionierung - eine Anzeige für den endgültigen Austausch der Bremstrommel darstellen.

Ohne den allgemeinen Erfindungsgedanken zu verlassen, sind verschiedene weitere Ausführungsformen möglich. So kann zum Beispiel auch um die Ringnut oder den entsprechend profilierten Abschnitt herum eine weitere Zone der Stirnfläche ausgebildet werden, die eine Oberflächenstruktur aufweist; anstelle der Ringnut kann auch eine anders strukturierte Fläche, die optisch oder mechanisch von der inneren Ringfläche unterschiedlich ist, vorgesehen werden.

So ist es zum Beispiel möglich, den inneren Flächenabschnitt, der Bremsfläche benachbart, glattzulassen und anstelle der Ringnut eine Rippung auf der Stirnfläche anzubringen, wobei eine vorläufige Verschleißanzeige zum Beispiel dann gegeben ist, wenn der innere glatte Abschnitt verschlissen ist, während der endgültige Verschleißzustand durch den vollständigen Abrieb der Profilfläche angezeigt wird.

Es liegt im Rahmen der Erfindung, je nach Dimensionierung der Bremsbacken, den inneren Abschnitt - axial betrachtet - versetzt zu den äußeren Abschnitten der Stirnfläche anzuordnen. Eine solche Ausführungsform wird insbesondere dann zu wählen sein, wenn durch Toleranzen zu erwarten ist, daß nicht immer eine sichere Positionierung der Bremsbeläge bis zur Stirnfläche der Bremstrommel oder über diese hinaus gewährleistet werden kann.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher beschrieben.

Dabei zeigen - jeweils in schematisierter Darstellung -
- Figur 1:: den oberen Randbereich einer Bremstrommel im Schnitt
- Figur 2:: eine Aufsicht auf die Stirnfläche der Bremstrommel nach Figur 1
- Figur 3:: eine alternative Gestaltung der Stirnfläche
- Figur 4:: eine weitere Ausführungsform einer erfindungsgemäßen Stirnfläche, hier jedoch im Schnitt
- Figur 5:: ebenfalls eine Schnittdarstellung einer erfindungsgemäß gestalteten Stirnfläche nach einer weiteren Ausführungsform.

In den Figuren sind gleiche oder gleichwirkende Bauteile mit gleichen Bezugsziffern dargestellt.

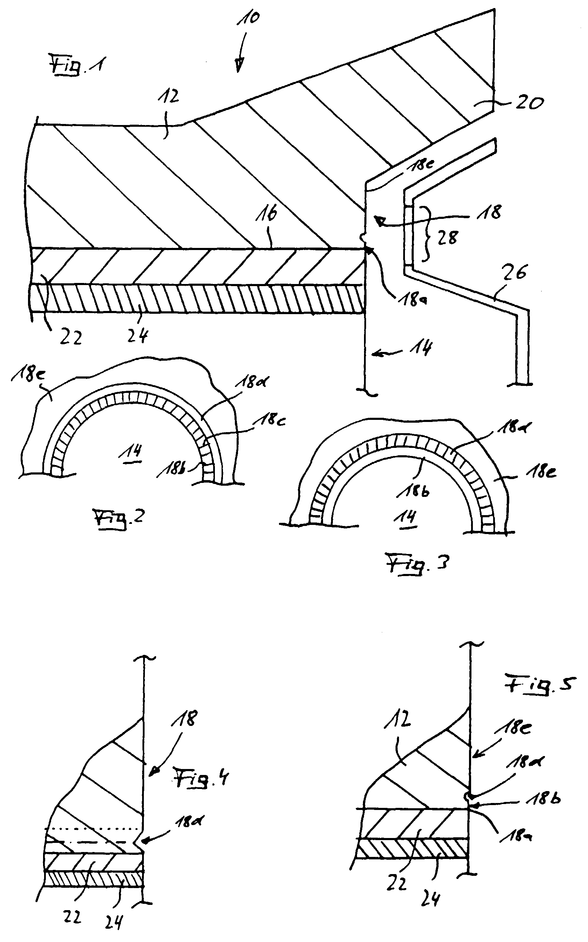

In Figur 1 ist ein Teilabschnitt der Wandung 12 einer Bremstrommel 10 im Bereich des offenen Endes (Öffnung 14) der Bremstrommel 10 dargestellt.

Zu erkennen ist ein Abschnitt der zylindrischen Bremsfläche 16 sowie eine Stirnfläche 18 eines an die Wandung 12 angeschlossenen Randbereiches 20.

Dabei zeigt Figur 1 die Bremstrommel 10 im Neuzustand.

Gegen die Bremsfläche 16 wirkt ein Bremsbelag 22, der auf einer Bremsbacke 24 aufliegt. Die äußere Umfangsfläche der Bremsbacke 22 ist dabei korrespondierend zur Form der Bremsfläche 16 der Wandung 12 gestaltet.

Wie die Figur erkennen läßt, verläuft der Bremsbelag 22 vom (nicht dargestellten) rückwärtigen Ende der Bremstrommel 10 bis in den Bereich der Stirnfläche 18, wobei Bremsbelag 22 und Stirnfläche 18 hier miteinander fluchten.

Die Erfindung verkörpert sich im besonderen in der Ausbildung der Stirnfläche 18, wobei die Figuren 2 bis 5 alternative Ausführungsformen zur Gestaltung der Stirnfläche 18 zeigen.

Aus der Zusammenschau der Figuren 1 und 2 ergibt sich, daß die Stirnfläche 18 zunächst, von der unteren Kante 18a aus verlaufend, einen ringförmigen Abschnitt 18b aufweist, der eine radiale Riffelung 18c aufweist. Um diesen ringförmigen, geriffelten Abschnitt 18c herum verläuft eine sickenartige, ringförmige Vertiefung 18d in die Stirnfläche 18 hinein, wobei die Vertiefung 18d, wie sich aus Figur 1 ergibt, im Querschnitt etwa halbkreisförmig gestaltet ist. Vom äußeren Rand der Vertiefung 18d erstreckt sich die Stirnfläche 18 weiter nach außen zum Randbereich 20.

Im Abstand vor der Öffnung 14 ist ein mit einem (nicht dargestellten) Achskörper verbundenes Abdeckblech 26 angeordnet, welches in dem mit 28 dargestellten Abschnitt ein Sichtfenster aufweist, so daß der Benutzer durch das Fenster 28 hindurch auf den Bereich der Stirnfläche 18 schauen kann, der mit der Riffelung 18b beziehungsweise der Ringnut 18d ausgebildet ist.

Mit zunehmender Benutzung der Bremstrommel 10 kommt es zu einem Verschleiß des Bremsbelages 22 (gestrichelt dargestellt) sowie zu einem Abrieb im Bereich der Bremsfläche 16 (ebenfalls gestrichelt dargestellt), bis der Verschleiß der Bremsfläche 16 in etwa bis zur inneren Kante der Ringnut 18d verläuft.

Die Reststärkenanzeige funktioniert wie folgt: der Benutzer sieht durch das Fenster 28 und kann dort erkennen, ob die Riffelung 18c noch ganz oder teilweise vorhanden ist. Ist sie nicht mehr vorhanden, so hat der Verschleißgrad der Bremsfläche 16 das in Figur 1 strichpunktierte Maß erreicht. Es ist nun beispielsweise Zeit, die Bremsfläche 16 neu auszudrehen. Ebenso kann die Dimensionierung des ringförmigen Abschnittes 18b aber auch so gewählt werden, daß nach vollständigem Abrieb der Bremsfläche 16 über die Höhe der Riffelung 18c bereits angezeigt wird, daß die Bremstrommel 10 gewechselt werden muß.

Neben dieser "optischen" Anzeige des Verschleißgrades ist auch eine mechanische Anzeige möglich. Zu diesem Zweck führt der Benutzer beispielsweise einen Stift durch das Fenster 28 und reibt am unteren (inneren) Ende der Stirnfläche 18 entlang. Fühlt es die Riffelung, so steht noch ausreichend "Fleisch" zur Verfügung, um die Bremstrommel 10 weiter zu benutzen. Ist die Riffelung nicht mehr zu fühlen, ergibt sich eine analoge Situation wie vorstehend beschrieben.

Wird die Verschleißanzeige so gewählt, daß die Bremstrommel 10 erst dann gewechselt werden muß, sofern die Bremsfläche 16 bis zu der gepunkteten Linie verschlissen ist, kann auch dies optisch und mechanisch ohne weiteres erfaßt werden, weil in diesem Moment auch die Ringnut 18d nicht mehr sichtbar oder ertastbar ist.

Eine alternative Ausführungsform zeigt Figur 3. Dabei ist der innere ringförmige Abschnitt 18b glatt ausgebildet und anstelle der ringförmigen Vertiefung 18d ist hier ein ringförmiger Abschnitt 18d mit radialer Riffelung vorgesehen.

Analog läßt sich wieder optisch und mechanisch anzeigen, ob der Verschleiß der Bremsfläche 16 die glatte Fläche 18b ganz oder vollständig erfaßt hat beziehungsweise wie weit der geriffelte ringförmige Abschnitt 18d verbraucht ist.

Bei einer dritten Ausführungsform nach Figur 4 schließt sich unmittelbar an die untere Kante 18a der Stirnfläche 18 eine im Schnitt V-förmige Nut 18d an, wobei die Form hier gleichschenklig ist.

Ist die Bremsfläche 16 bis auf die Höhe der tiefsten Stelle der Nut 18d (gestrichelt dargestellt) verschlissen, so kann dies - je nach Dimensionierung der Nut 18d - als Indikator dafür gelten, daß der Bremsbelag 22 erneuert, die Bremsfläche 16 ausgedreht und/oder die Bremstrommel 10 erneuert werden muß.

In der Regel wird die Dimensionierung so erfolgen, daß eine der beiden erstgenannten Alternativen durch den entsprechenden Verschleißgrad angezeigt wird.

Der Verschleißzustand, bei dem die Bremstrommel 10 erneuert werden muß, wird in diesem Fall dann dadurch angezeigt, daß die Nut 18 vollständig (bis zur gepunkteten Linie) "verbraucht" ist.

Auch hier gilt wieder, daß der Verbrauchszustand der Nut 18d sowohl optisch wie mechanisch erkennbar ist.

Die Ausführungsform nach Figur 5 ähnelt der von Figur 1 mit der Maßgabe, daß der geriffelte Abschnitt 18b gegenüber dem äußeren Abschnitt 18e etwas in Richtung auf das Trommelinnere versetzt angeordnet ist. Bezüglich der Funktion und Verschleißanzeige gilt das zu Figur 1 Gesagte hier jedoch entsprechend.

In jedem Fall wird also eine einfache, aber sichere Verschleißanzeige für die Bremstrommel 10 beziehungsweise den Bremsbelag 22 zur Verfügung gestellt.

Es liegt selbstverständlich im Rahmen der Erfindung, die konkrete Ausbildung der Stirnfläche 18 auch so zu wählen, daß "Zwischenzustände" optisch oder mechanisch angezeigt werden können.

## Patentansprüche

1. Bremstrommel (10) mit einer zylindrischen, inneren Bremsfläche (16) für korrespondierende Bremsbeläge (22) und einer, am offenen Ende der Bremstrommel (10) ausgebildeten ringförmigen Stirnfläche (18), die zumindest an ihrem, an die Bremsfläche (16) anschließenden Abschnitt (18b, c, d) oberflächlich strukturiert ist.

2. Bremstrommel nach Anspruch 1, bei der der oberflächlich strukturierte Abschnitt (18b, c, d) ringförmig um die Öffnung (14) verläuft.

3. Bremstrommel nach Anspruch 1 oder 2, bei der der oberflächlich strukturierte Abschnitt (18b) aus einer Materialaufrauhung besteht.

4. Bremstrommel nach Anspruch 1 oder 2, bei der der oberflächlich strukturierte Abschnitt aus nebeneinander angeordneten Sicken und Noppen besteht.

5. Bremstrommel nach Anspruch 1 oder 2, bei der der oberflächlich strukturierte Abschnitt (18b) aus nebeneinander mit Abstand angeordneten Stegen (Riffelung 18c) besteht.

6. Bremstrommel nach Anspruch 5, bei der die Oberflächenstrukturierung (18b) aus einer radial verlaufenden Rippung (18c) besteht.

7. Bremstrommel nach Anspruch 1 oder 2, bei der der oberflächlich strukturierte Abschnitt aus einer ringförmigen, sich unmittelbar an die Bremsfläche (16) anschließenden Nut (18d) besteht.

8. Bremstrommel nach Anspruch 7, bei der zwischen der inneren Kante (18a) der Stirnfläche (18) und der Nut (18d) ein ringförmiger Zwischenbereich (18b) angeordnet ist.

9. Bremstrommel nach Anspruch 8, bei der der innere Abschnitt (18b) eine Oberflächenstruktur nach einem der Ansprüche 3 bis 6 aufweist.

10. Bremstrommel nach einem der Ansprüche 7 bis 9, bei der die Ringnut (18d) - im Schnitt - das Profil eines Kreisbogenabschnitts aufweist.

11. Bremstrommel nach einem der Ansprüche 7 bis 9, bei der die Ringnut (18e) - im Schnitt - ein in die Stirnfläche (18) sich öffnendes V-Profil aufweist.

12. Bremstrommel nach einem der Ansprüche 1 bis 11, bei der die Breite des ringförmigen Abschnittes (18b) und/oder ein Teilabschnitt der ringförmigen Nut (18d) dem maximalen Verschleißzustand der Bremstrommel (10) entspricht.

13. Bremstrommel nach einem der Ansprüche 1 bis 11, bei der die Breite des ringförmigen Abschnittes (18b) einem ersten Verschleißzustand der Bremstrommel (10) und die Breite des ringförmigen Abschnittes (18d), zusammen mit der Breite des ringförmigen Abschnittes (18b) dem maximalen Verschleißzustand der Bremstrommel (10) entspricht.

14. Bremstrommel nach einem der Ansprüche 7 bis 13, bei der die Ringnut (18d) durch eine Ringfläche unterschiedlicher Oberflächenstruktur gegenüber dem inneren Abschnitt (18b) und gegebenenfalls einem äußeren Abschnitt (18e) der Stirnfläche (18) ersetzt ist.

## Claims

1. A brake drum (10) having a cylindrical inner braking surface (16) for corresponding brake linings (22), and an annular end face (18) formed at the open end of the break drum (10), which is structured on its surface, at least at the portion (18b, c, d) thereof adjoining the braking surface (16).

2. The brake drum according to claim 1, wherein the portion (18b, c, d) being structured on its surface runs annularly around the opening (14).

3. The brake drum according to claims 1 or 2, wherein the portion (18b) being structured on its surface consists of a roughening of the material.

4. The brake drum according to claims 1 or 2, wherein the portion being structured on its surface consists of beads and neps being disposed side by side.

5. The brake drum according to claims 1 or 2, wherein the portion (18b) being structured on its surface consists of webs being disposed side by side in spaced apart relationship (ribbing 18c).

6. The brake drum according to claim 5, wherein the structuring (18b) of the surface consists of a ribbing (18c) running radially.

7. The brake drum according to claims 1 or 2, wherein the portion being structured on its surface consists of an annular groove (18d) adjoining directly the breaking surface (16).

8. The brake drum according to claim 7, wherein an annular intermediate zone (18b) is disposed between the inner edge (18a) of the end face (18) and the groove (18d).

9. The brake drum according to claim 8, wherein the inner portion (18b) has a surface structure according to anyone of claims 3 through 6.

10. The brake drum according to anyone of claims 7 through 9, wherein the ring groove (18d) has - in section - the profile of a circular arc portion.

11. The brake drum according to anyone of claims 7 through 9, wherein the ring groove (18e) has - in section - an V-profile opening into the end face.

12. The brake drum according to anyone of claims 1 through 11, wherein the width of the annular portion (18b) and/or a section of the annular groove (18d) corresponds to the condition of maximum wear.

13. The brake drum according to anyone of claims 1 through 11, wherein the width of the annular portion (18b) corresponds to a first condition of wear of the brake drum (10), and the width of the annular portion (18d) together with the width of the annular portion (18b) correspond to the condition of maximum wear of the brake drum (10).

14. The brake drum according to anyone of claims 7 through 13, wherein the ring groove (18d) is replaced by a ring surface of different surface structure, opposite of the inner portion (18b) and possibly an outer portion (18e) of the end face (18).

## Revendications

1. Tambour de frein (10) présentant une surface de freinage intérieure cylindrique (16) pour des garnitures de frein (22) correspondantes et une surface frontale circulaire (18) disposée à l'extrémité ouverte du tambour de frein (10) et structurée en surface au moins sur sa section (18b, c, d) contiguë à la surface de freinage (16).

2. Tambour de frein selon la revendication (1) dans lequel la section structurée en surface (18b, c, d) présente une forme circulaire autour de l'ouverture (14).

3. Tambour de frein selon la revendication 1 ou 2, dans lequel la section structurée en surface (18b) est réalisée dans un matériau rugueux.

4. Tambour de frein selon la revendication 1 ou 2 dans lequel la section structurée en surface se compose de moulures et de nopes disposées les unes à côté des autres.

5. Tambour de frein selon la revendication 1 ou 2 dans lequel la section (18b) structurée en surface se compose de nervures (striage 18c) disposées les unes à côté des autres à une certaine distance.

6. Tambour de frein selon la revendication 5, dans lequel la structure superficielle (18b) se compose de nervures (18c) radiales.

7. Tambour de frein selon la revendication 1 ou 2, dans lequel la section structurée en surface se compose d'une rainure (18d) circulaire, directement contiguë à la surface de freinage (16).

8. Tambour de frein selon la revendication 7 dans lequel une zone intermédiaire (18b) circulaire est disposée entre l'arête interne (18a) de la surface frontale (18) et la rainure (18d).

9. Tambour de frein selon la revendication 8 dans lequel la section intérieure (18b) présente une structure superficielle selon l'une quelconque des revendications 3 à 6.

10. Tambour de frein selon l'une quelconque des revendications 7 à 9 dans lequel la rainure circulaire (18d) - en coupe - présente le profil d'une section en arc de cercle.

11. Tambour de frein selon l'une quelconque des revendications 7 à 9 dans lequel la rainure circulaire (18e) - en coupe - présente un profil en V s'ouvrant dans la surface frontale (18).

12. Tambour de frein selon l'une quelconque des revendications 1 à 11 dans lequel la largeur de la section circulaire (18b) et/ou une section partielle de la rainure circulaire (18d) correspondent à l'état d'usure maximum du tambour de frein (10).

13. Tambour de frein selon l'une quelconque des revendications 1 à 11 dans lequel la largeur de la section circulaire (18b) correspond à un premier état d'usure du tambour de frein (10) et la largeur de la section circulaire (18d) correspond en même temps que la largeur de la section circulaire (18b) à l'état d'usure maximum du tambour de frein (10).

14. Tambour de frein selon l'une quelconque des revendications 7 à 13 dans lequel la rainure circulaire (18d) est remplacée par une surface circulaire de structure superficielle différente par rapport à la section intérieure (18b) et le cas échéant à une section extérieure (18e) de la surface frontale (18).
